(19) Europäisches Patentamt
European Patent Office
Office européen des brevets

(11) **EP 4 757 438 A1**

(12) **EUROPEAN PATENT APPLICATION**
published in accordance with Art. 153(4) EPC

(43) Date of publication:
**10.06.2026 Bulletin 2026/24**

(21) Application number: **24849498.1**

(22) Date of filing: **26.07.2024**

(51) International Patent Classification (IPC):
*H04W 52/34* (2009.01)    *H04W 52/36* (2009.01)
*H04W 52/14* (2009.01)    *H04W 52/32* (2009.01)
*H04W 52/42* (2009.01)    *H04B 7/0426* (2017.01)
*H04W 72/0446* (2023.01)    *H04W 72/1268* (2023.01)
*H04W 72/231* (2023.01)    *H04W 72/232* (2023.01)

(52) Cooperative Patent Classification (CPC):
H04B 7/0426; H04W 52/14; H04W 52/32;
H04W 52/34; H04W 52/36; H04W 52/42;
H04W 72/0446; H04W 72/1268; H04W 72/231;
H04W 72/232

(86) International application number:
**PCT/KR2024/010907**

(87) International publication number:
**WO 2025/028929 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.08.2023 KR 20230101593**

(71) Applicant: **LG Electronics Inc.**
**Yeongdeungpo-gu**
**Seoul 07336 (KR)**

(72) Inventors:
• **KIM, Hyungtae**
**Seoul 06772 (KR)**
• **KANG, Jiwon**
**Seoul 06772 (KR)**
• **GO, Seongwon**
**Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR PERFORMING UPLINK TRANSMISSION AND RECEPTION IN WIRELESS COMMUNICATION SYSTEM**

(57)    Disclosed are a method and a device for performing uplink transmission and reception in a wireless communication system. A method for performing uplink transmission by a terminal according to an embodiment of the present disclosure may comprise the steps of: receiving, from a base station, first information related to at least one first time unit in which a first uplink (UL) channel may be scheduled and at least one second time unit in which a second UL channel may be scheduled; and transmitting at least one of the first UL channel and the second UL channel to the base station on the basis of the first information, wherein, in a third time unit in which the first time unit and the second time unit overlap, "predefined maximum transmission power (Pcmax) for UL transmission $* a$ ($0 \leq a \leq 1$)" is applied as maximum transmission power for the first UL channel, and "predefined maximum transmission power for UL transmission $* \beta$ ($0 \leq \beta \leq 1$)" is applied as maximum transmission power for the second UL channel.

FIG.8

RECEIVING, FROM THE BASE STATION, FIRST INFORMATION RELATED TO AT LEAST ONE FIRST TIME UNIT IN WHICH A FIRST UL CHANNEL IS SCHEDULABLE AND AT LEAST ONE SECOND TIME UNIT IN WHICH A SECOND UL CHANNEL IS SCHEDULABLE — S810

TRANSMITTING AT LEAST ONE OF THE FIRST UL CHANNEL OR THE SECOND UL CHANNEL TO THE BASE STATION BASED ON THE FIRST INFORMATION — S820

EP 4 757 438 A1

**Description**

[TECHNICAL FIELD]

The present disclosure relates to a wireless communication system, and more specifically, to a method and device for performing uplink transmission and reception in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and device for performing uplink transmission and reception in a wireless communication system.

An additional technical problem of the present disclosure is to provide a method and device for applying beams to each panel when simultaneous transmission across multiple panels (STxMP) is established in a wireless communication system.

The technical objects to be achieved by the present disclosure are not limited to the above-described technical objects, and other technical objects which are not described herein will be clearly understood by those skilled in the pertinent art from the following description.

[Technical Solution]

According to one embodiment of the present disclosure, a method performed by a user equipment (UE) in a wireless communication system includes receiving, from a base station, first information related to at least one first time unit in which a first uplink (UL) channel is schedulable and at least one second time unit in which a second UL channel is schedulable; and transmitting, to the base station, at least one of the first UL channel or the second UL channel based on the first information, and in a third time unit where the first time unit and the second time unit overlap: "Predefined maximum transmission power for UL transmission (Pcmax) * $\alpha(0 \leq \alpha \leq 1)$" may be applied as a maximum transmission power for the first UL channel, and "Predefined maximum transmission power for UL transmission * $\beta(0 \leq \beta \leq 1)$" may be applied as a maximum transmission power for the second UL channel.

According to antoher embodiment of the present disclosure, a method performed by a base station in a wireless communication system may include transmitting, to a user equipment (UE), first information related to at least one first time unit in which a first uplink (UL) channel is schedulable and at least one second time unit in which a second UL channel is schedulable; and receiving, from the UE, at least one of the first UL channel or the second UL channel based on the first information, and in a third time unit where the first time unit and the second time unit overlap: "Predefined maximum transmission power for UL transmission (Pcmax) * $\alpha(0 \leq \alpha \leq 1)$" may be applied as a maximum transmission power for the first UL channel, and "Predefined maximum transmission power for UL transmission * $\beta(0 \leq \beta \leq 1)$" may be applied as a maximum transmission power for the second UL channel.

[Technical Effects]

According to various embodiments of the present disclosure, a method and device for performing uplink transmission and reception in a wireless communication system may be provided.

Furthermore, according to various embodiments of the present disclosure, a method and device for applying beams per panel when STxMP is configured in a wireless communication system may be provided.

In addition, according to various embodiments of the present disclosure, the UE may efficiently perform STxMP-based transmission.

The technical objects to be achieved by the present disclosure are not limited to the above-described technical objects, and other technical objects which are not described herein will be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a signaling procedure between a network and a UE for an uplink transmission and reception method according to an embodiment of the present disclosure.
FIG. 8 is a diagram illustrating an uplink transmission operation of a UE in a wireless communication system to which the present disclosure may be applied.
FIG. 9 is a diagram illustrating an uplink reception operation of a base station in a wireless communication system to which the present disclosure may be applied.
FIG. 10 is a diagram illustrating a procedure for establishing a UL channel that can be scheduled for each slot, according to an embodiment of the present disclosure.
FIG. 11 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point (AP), a Network(5G network), an AI (Artificial Intelligence) system/module, an RSU(road side unit), a robot, a drone (UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone (UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE (Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS (Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform

- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

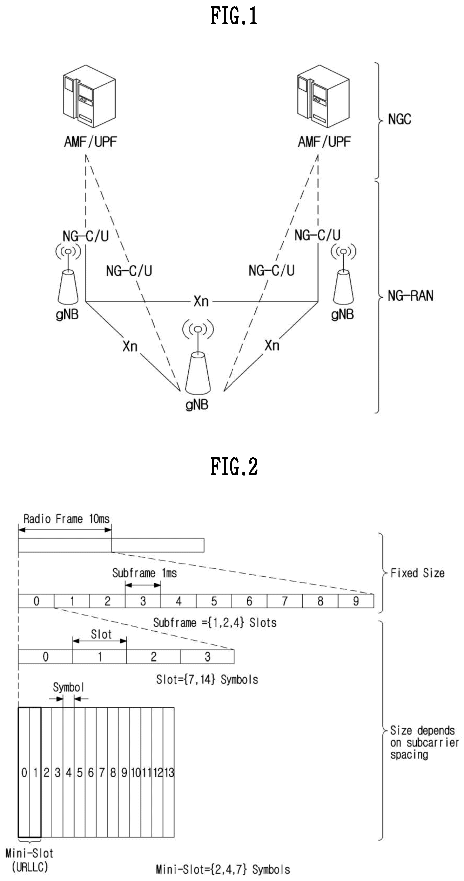

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | $\Delta f = 2^\mu \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10$ms. Here, a radio frame is configured with 10 subframes having a duration of $T_{sf} = (\Delta f_{max} N_f/1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration μ, slots are numbered in an increasing order of $n_s^\mu \in \{0,...,N_{slot}^{subframe,\mu}-1\}$ in a subframe and are numbered in an increasing order of $n_{s,f}^\mu \in \{0,...,N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

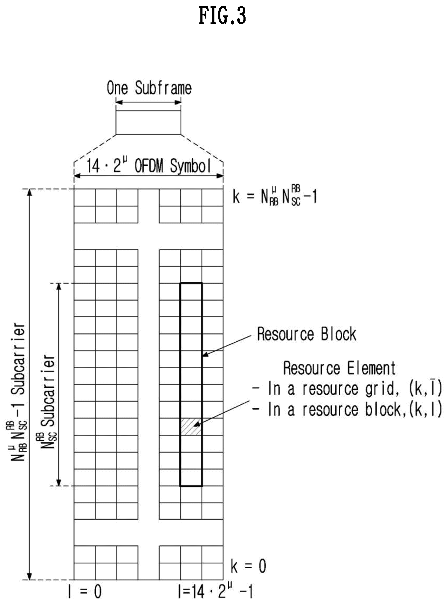

FIG. 3 illustrates a resource grid in a wireless communication system to which the present disclosure may be applied. In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l').

Here, k=0,...,$N_{RB}^{\mu}N_{sc}^{RB}$-1 is an index in a frequency domain and l'=0,...,$2^{\mu}N_{symb}^{(\mu)}$-1 refers to a position of a symbol in a subframe. When referring to a resource element in a slot, an index pair (k,l) is used. Here, l=0,...,$N_{symb}^{\mu}$-1. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

- absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

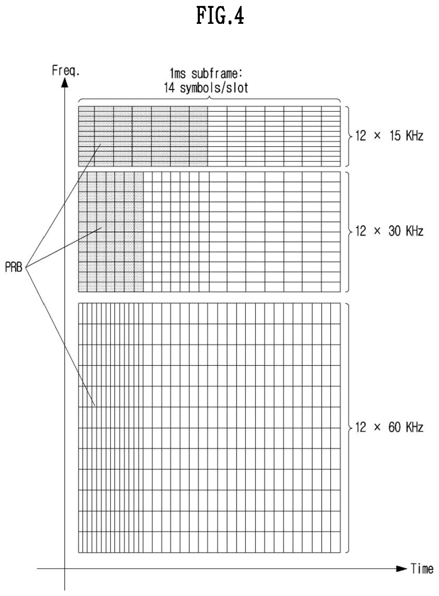

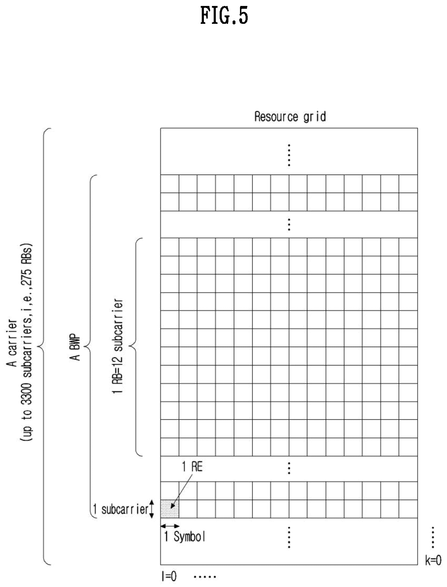

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP.

Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.).

In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

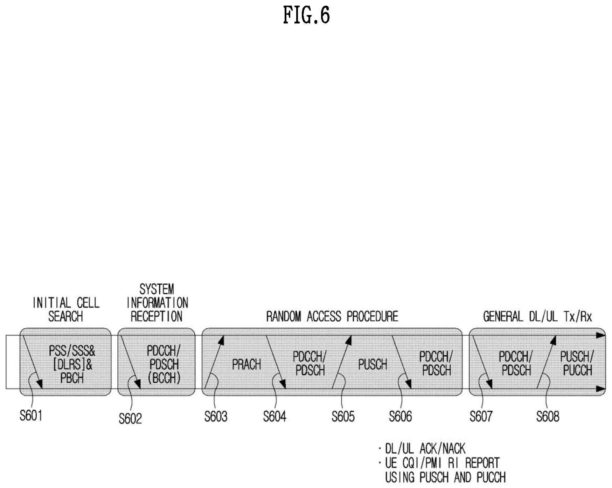

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH (Physical Uplink Shared Channel) /PUCCH (physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB (physical resource block) mapping, etc.), information related to a transport block(TB) (e.g., MCS, NDI, RV, etc.), information related to a HARQ (e.g., a process number, DAI, PDSCH-HARQ feedback timing, etc.), information related to multiple antennas (e.g., an antenna port, a TCI (transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-Co Location (QCL)

Antenna ports are defined such that the channel through which a symbol on an antenna port is carried can be inferred from the channel through which another symbol on the same antenna port is carried. Two antenna ports are said to be in a QC/QCL (quasi co-located or quasi co-location) relationship if the properties of the channel through which a symbol on one antenna port is carried can be inferred from the channel through which a symbol on another antenna port is carried.

Here, the channel characteristics include at least one of delay spread, Doppler spread, frequency/Doppler shift, average received power, received timing/average delay, and spatial Rx parameter. Here, the spatial Rx parameter refers to a spatial (reception) channel characteristic parameter such as angle of arrival.

The UE may be configured with a list of up to M TCI-State configurations in the higher layer parameter PDSCH-Config to decode the PDSCH according to the detected PDCCH having the intended DCI for the UE and the given serving cell. The M depends on the UE capability.

Each TCI-State includes parameters for establishing a quasi co-location relationship between one or two DL reference signals and the DM-RS port of the PDSCH.

The quasi co-location relationship is configured by the higher layer parameters qcl-Type1 for the first DL RS and qcl-Type2 (if set) for the second DL RS. For two DL RSs, the QCL types are not the same, regardless of whether the references are the same DL RS or different DL RSs.

The quasi co-location type corresponding to each DL RS is given by the higher layer parameter qcl-Type of QCL-Info, and can take one of the following values:

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, if a target antenna port is a specific NZP CSI-RS, the corresponding NZP CSI-RS antenna port(s) can be indicated/configured to be QCL with a specific TRS from a QCL-Type A perspective and with a specific SSB from a QCL-Type D perspective. A UE that has received such an indication/configuration may receive the corresponding NZP CSI-RS using the Doppler and delay values measured at the QCL-TypeA TRS, and apply the reception beam used for QCL-TypeD SSB reception to the corresponding NZP CSI-RS reception.

The UE may receive an activation command by MAC CE signaling used to map up to eight TCI states to codepoints of the DCI field 'Transmission Configuration Indication'.

Additionally, one or more DL TCI states as well as one or more UL TCI states may be indicated together via DL DCI (e.g., DCI format 1_1 or 1_2). As another example, the DL DCI may include only UL TCI states without DL TCI states. UL beam (i.e., UL spatial parameters) and power control related parameters may be indicated by the UL TCI states. As an example, one UL TCI state may be indicated via the TCI field of the DL DCI, and the UL TCI state may be applied to all or part of the PUSCH/PUCCH/SRS resource sets after a beam application time.

Multi-TRP related operations

Coordinated Multi Point (CoMP) is a technique that effectively controls interference by having multiple base stations exchange (e.g., using the X2 interface) or utilize channel information (e.g., RI/CQI/PMI/LI (layer indicator)) fed back from terminals and cooperatively transmit it to terminals. Depending on the method used, CoMP can be categorized into joint transmission (JT), coordinated scheduling (CS), coordinated beamforming (CB), dynamic point selection (DPS), and dynamic point blocking (DPB).

The M-TRP transmission method, in which M TRPs transmit data to one UE, may be broadly divided into i) eMBB M-TRP transmission, a method for increasing transmission rate, and ii) URLLC M-TRP transmission, a method for increasing reception success rate and reducing latency.

In addition, from the perspective of DCI transmission, the M-TRP transmission method may be divided into i) M-TRP transmission based on M-DCI (multiple DCI) in which each TRP transmits a different DCI, and ii) M-TRP transmission based on S-DCI (single DCI) in which one TRP transmits a DCI. For example, in the case of S-DCI based M-TRP transmission, since all scheduling information for data transmitted by an M TRP must be transmitted to the terminal through a single DCI, it can be used in an ideal backhaul (ideal BH: ideal BackHaul) environment in which dynamic cooperation between the two TRPs is possible.

The UE may recognize the PUSCH (or PUCCH) scheduled by the DCI received in different control resource sets (CORESETs) (or CORESETs belonging to different CORESET groups) as a PUSCH (or PUCCH) transmitted in different TRPs or as a PDSCH (or PDCCH) of different TRPs. In addition, the method for UL transmission (e.g., PUSCH/PUCCH) transmitted in different TRPs described below may be equally applied to UL transmission (e.g., PUSCH/PUCCH) transmitted in different panels belonging to the same TRP.

Hereinafter, the CORESET group identifier (group ID) described/mentioned in the present disclosure may mean an index/identification information (e.g., ID) for distinguishing a CORESET for each TRP/panel. And the CORESET group may be a group/union of CORESETs distinguished by an index/identification information (e.g., ID)/the CORESET group ID for distinguishing a CORESET for each TRP/panel. For example, the CORESET group ID may be specific index information defined in the CORSET configuration. In this case, the CORESET group may be configured/indicated/defined by an index defined in the CORESET configuration for each CORESET. And/or the CORESET group ID may mean an index/identification information/indicator for distinguishing/identifying between CORESETs configured/associated with each TRP/panel. Hereinafter, the CORESET group ID described/mentioned in the present disclosure may be expressed by being replaced with a specific index/specific identification information/specific indicator for distinguishing/identifying the CORESETs configured/associated in each TRP/panel. The CORESET group ID, i.e., the specific index/specific identification information/specific indicator for distinguishing/identifying the CORESETs configured/associated in each TRP/panel, may be configured/indicated to the UE through higher layer signaling (e.g., RRC signaling) /second layer signaling (L2 signaling, e.g., MAC-CE)/first layer signaling (L1 signaling, e.g., DCI). For example, PDCCH detection may be configured/indicated to be performed for each TRP/panel (i.e., for each TRP/panel belonging to the same CORESET group) in units of the corresponding CORESET group. And/or, uplink control information (e.g., CSI, HARQ-A/N (ACK/NACK), SR (scheduling request)) and/or uplink physical channel resources (e.g., PUCCH/PRACH/SRS resources) may be separately managed/controlled for each TRP/panel in the corresponding CORESET group (i.e., for each TRP/panel belonging to the same CORESET group). And/or, HARQ A/N (process/retransmission) for PDSCH/PUSCH, etc. scheduled for each TRP/panel in the corresponding CORESET group (i.e., for each TRP/panel belonging to the same CORESET group) may be managed.

For example, the ControlResourceSet information element (IE), which is an higher layer parameter, is used to configure a time/frequency control resource set (CORESET). For example, the control resource set (CORESET) may be related to detection and reception of downlink control information. The ControlResourceSet IE may include a CORESET-related ID (e.g., controlResourceSetID)/an index of a CORESET pool for the CORESET (e.g., CORESETPoolIndex)/time/frequency resource configuration of the CORESET/TCI information related to the CORESET, etc. For example, the index of the CORESET pool (e.g., CORESETPoolIndex) may be set to 0 or 1. In the above description, a CORESET group may correspond to a CORESET pool, and a CORESET group ID may correspond to a CORESET pool index (e.g., CORESETPoolIndex).

The Rel-17 NR standard supports (1) MTRP PDCCH repeated transmission, (2) MTRP PDCCH single frequency network (SFN) transmission, (3) MTRP PDSCH SFN transmission, (4) S-DCI-based MTRP PUSCH repeated transmission, and (4) single PUCCH resource-based MTRP PUCCH repeated transmission. All of these transmission techniques are URLLC target enhancements for increasing reliability, in which the same contents (i.e., DCI or UL/DL TB or UCI) are repeatedly transmitted. In the case of MTRP PDCCH repetitive transmission, it is repeatedly transmitted in TDM or FDM, MTRP PDCCH/PDSCH SFN is repeatedly transmitted at the same time/frequency/layer, S-DCI-based MTRP PUSCH repetitive transmission is repeatedly transmitted in TDM, and single PUCCH resource-based MTRP PUCCH repetitive transmission is repeatedly transmitted in TDM.


Simultaneous transmission across multi-panel (STxMP)

In Rel-18, the introduction of a method for a UE to simultaneously transmit multiple channels/reference signals (RSs) of the same type or multiple channels/RSs of different types is being discussed. In the case of a legacy UE, the operation of transmitting multiple channels/RSs at one time (i.e., the same time resource) is restricted (for example, it is possible to simultaneously transmit multiple SRS resources of different SRS resource sets for UL beam measurement, but it is not possible to simultaneously transmit multiple PUSCHs), but this restriction may be relaxed in the case of advanced UEs in the future, and the advanced UEs in the future will be able to simultaneously transmit multiple channels or RSs using multiple transmit panels. This operation may be referred to as simultaneous transmission across multi-panels (STxMP), and a UE supporting this operation may be referred to as an STxMP UE. For example, two PUSCHs (PUSCH 1, 2) corresponding to (carrying) two UL TBs may be scheduled in the same resource element (RE) (or multiple identical REs), and spatial relation RS 1 and power control (PC) parameter set 1 (i.e., UL TCI state 1) and spatial relation RS 2 and PC parameter set 2 (i.e., UL TCI state 2) may be configured for transmission of PUSCH 1 and 2, respectively. The UE may transmit PUSCH 1 using panel 1 corresponding to UL TCI state 1, and simultaneously transmit PUSCH 2 using panel 2 corresponding to UL TCI state 2.

When scheduling a PUSCH through DCI, the base station may indicate whether the PUSCH will be transmitted in STxMP, in a single panel, or in M-TRP PUSCH repetition. In this case, the UE must have STxMP capability, and the STxMP mode (e.g., SDM method/mode or SFN method/mode) may be enabled in advance through higher layer signaling (e.g., RRC signaling). For this purpose, the existing SRS resource set indication field may be redefined and used, or a new DCI field may be introduced.

Two methods are being considered for the Rel-18 STxMP transmission technique: single frequency network (SFN) and spatial division multiplexing (SDM).

The SFN method is a method in which the same channel (or RS) transmitted from one panel is transmitted from another panel. However, since the UL channel (or RS) of each panel is different, it is transmitted using a different precoder, different transmission power, and different transmission beam (i.e., spatial relation RS indicated by UL TCI) for each panel.

The SDM method is a method that can be transmitted from rank 2 or higher, in which some of the multi-layers are transmitted on panel 1 and the remaining layers are transmitted on panel 2. For example, in a 2-layer transmission, the first layer can be transmitted on panel 1 and the second layer can be transmitted on panel 2. Even in this case, since the UL channels of each panel are different, different precoders, different transmission powers, and different transmission beams (i.e., spatial relation RSs indicated by UL TCI) are used for transmission for each panel.

The following operations may be supported for dynamic switching between STxMP SDM mode and sTRP transmission.

- For sTRP transmission, the maximum number of layers of sTRP transmission may be configured by maxRank (or Lmax).
- For SDM mode: A single maximum number of layers (e.g., separate from maxRank (or Lmax) in case of sTRP) may be configured, which applies separately to the first SRS resource set and the second SRS resource set.

The total number of PUSCH antenna ports used for SDM and sTRP may be the same, but is not limited thereto.

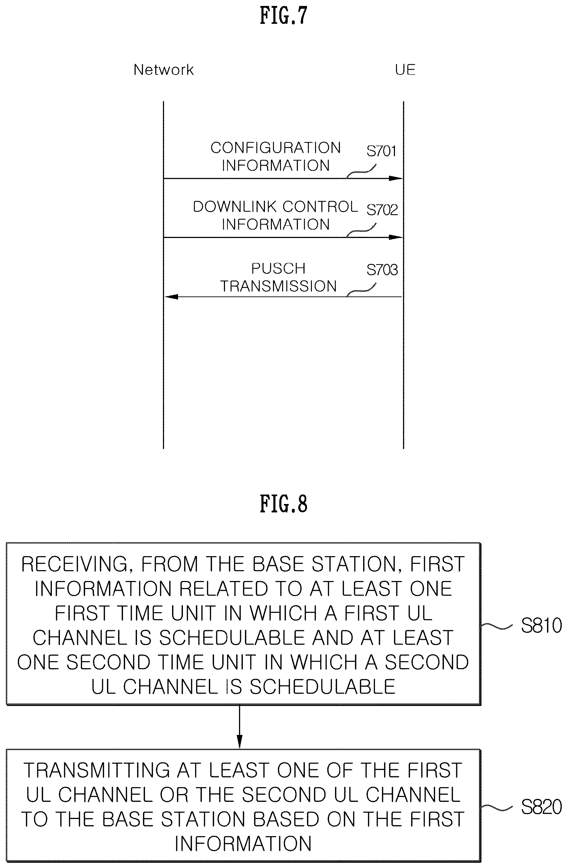

FIG. 7 illustrates a signaling procedure between a network and a UE for a PUSCH transmission and reception method according to one embodiment of the present disclosure.

FIG. 7 illustrates signaling between a network (e.g., TRP 1, TRP 2) and a UE in a situation of multiple TRPs (i.e., M-TRP, or multi-cell, hereinafter, all TRPs can be replaced with cells) to which the methods proposed in the present disclosure (e.g., combinations of one or more of the proposed methods in Embodiments 1 to 4-1, described below) can be applied.

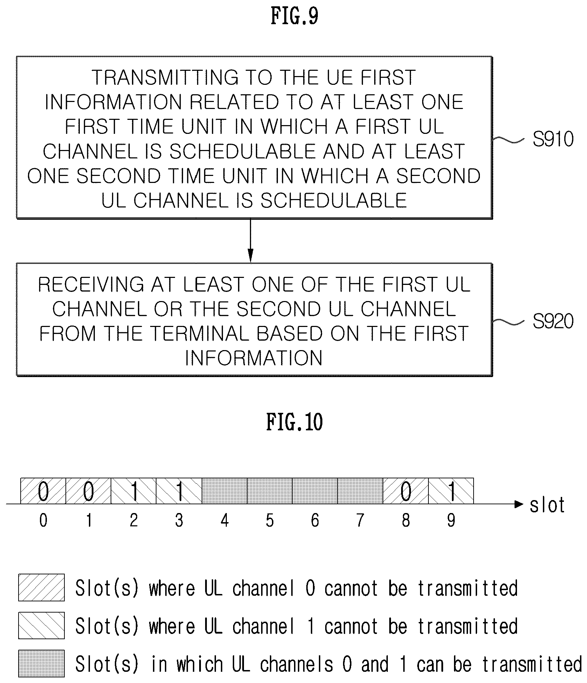

Here, the UE/network side is exemplary and may be replaced with various devices as described with reference to FIG. 10. FIG. 7 is provided for convenience of explanation and does not limit the scope of the present disclosure. In addition, some step(s) shown in FIG. 7 may be omitted depending on the situation and/or settings. In addition, in the operation of the network side/UE of FIG. 7, the above-described uplink transmission/reception operation, M-TRP-related operation, etc. may be referenced or utilized.

In the following description, the network side may be a single base station including multiple TRPs, or may be a single cell including multiple TRPs. Alternatively, the network side may include multiple RRHs (remote radio heads)/RRUs (remote radio units). For example, an ideal/non-ideal backhaul may be established between TRP 1 and TRP 2 constituting the network side. In addition, although the following description is based on multiple TRPs, it can be equally extended and applied to transmission through multiple panels/cells, and can also be extended and applied to transmission through multiple RRHs/RRUs, etc.

A panel may be replaced with an expression such as an SRS resource set, a CORESET group (or a CORESET pool), a TRP, a beam, a capability value index, an antenna array, a cell (e.g., a macro cell/small cell/pico cell, etc.), a transmission point (TP), a base station (gNB, etc.), etc. As described above, a panel and/or a TRP may be distinguished based on information about a CORESET group (or a CORESET pool) (e.g., a CORESET index, an ID).

For example, different SRS resource sets/SRS resources may be mapped/configured/corresponded to different panels. For example, the first panel may be mapped to SRS resource set 0, and the second panel may be mapped to SRS resource set 1. The SRS resource(s) of SRS resource set 0 may refer to the transmit antenna port(s) of the first panel, and the SRS resource(s) of SRS resource set 1 may refer to the transmit antenna port(s) of the second panel.

For example, if a single UE is configured to transmit and receive with multiple TRPs (or cells), this may mean that multiple CORESET groups (or CORESET pools) are configured for the single UE. The configuration of such CORESET groups (or CORESET pools) may be performed through higher layer signaling (e.g., RRC signaling, etc.).

In addition, the base station may be a general term for an object that performs data transmission and reception with a terminal. For example, the base station may be a concept that includes one or more TPs (Transmission Points), one or more TRPs (Transmission and Reception Points), etc. In addition, the TPs and/or TRPs may include a panel of the base station, a transmission and reception unit, etc.

Meanwhile, although not shown in FIG. 7, for example, the UE may report UE capability information to the network via/using TRP 1 (and/or TRP 2).

Here, in case of a UE supporting multi-panel (i.e., STxMP) uplink (e.g., PUSCH) transmission, the UE capability information may include at least one of i) information on a codebook subset supported for each of the first panel and the second panel, and ii) information on a codebook subset supported for each of multi-panel transmission (i.e., STxMP) and non-multi-panel transmission (i.e., STRP (single TRP) transmission). Additionally, the UE capability information reported by the UE to the base station may include various types of capability information described in Embodiments 1 to 4-1 below.

The UE may receive configuration information from the network via/using TRP 1 (and/or TRP 2) (S701).

The above configuration information may include information related to network configuration (e.g., TRP configuration) / information related to M-TRP-based transmission and reception (e.g., resource allocation, etc.). In this case, the configuration information may be transmitted through higher layer signaling (e.g., RRC signaling, MAC-CE, etc.).

In addition, for example, the configuration information may include information for configuring joint TCI and/or separate DL/UL TCI. For example, the configuration information may include a list of TCI states that provide a reference for determining an uplink transmission spatial filter of a DMRS/uplink signal (e.g., SRS) of an uplink channel (e.g., PUSCH, PUCCH) .

In addition, for example, the configuration information may include information on a multi-panel (i.e., STxMP) PUSCH transmission scheme. For example, it may include information (e.g., a higher layer parameter multipanelscheme) that sets whether to transmit multi-panel (i.e., STxMP), and through the information, whether to transmit STxMP and the STxMP transmission scheme (e.g., SDM scheme or SFN scheme) may be configured.

In addition, for example, the configuration information may include information for configuring the maximum number of layers per panel for multi-panel (i.e., STxMP) PUSCH transmission. That is, when the UE supports two panels and multi-panel PUSCH transmission is configured through two panels, the configuration information may include first information/parameter for configuring the maximum number of layers for the first panel (e.g., upper layer parameter maxRank1, higher layer parameter for configuring Lmax1 value, etc.) and second information/parameter for configuring the maximum number of layers for the second panel (e.g., higher layer parameter maxRank2, higher layer parameter for configuring Lmax2 value, etc.). In addition, the configuration information may further include third information/parameter for configuring the maximum number of layers for STRP PUSCH transmission (e.g., higher layer parameter maxRank, higher layer parameter for configuring Lmax value, etc.). Additionally, the configuration information may further include codebook subset information for the first panel (e.g., higher layer parameter codebookSubset1) and codebook subset information for the second panel (e.g., higher layer parameter codebookSubset2).

In addition, for example, the configuration information may include information on an SRS resource set, and at least two SRS resource sets may be configured for the multi-panel PUSCH transmission. Here, as the usage for the SRS resource set is configured as 'codebook' or 'non-codebook', it may be indicated whether the PUSCH transmission scheduled by the DCI referencing the corresponding SRS resource set corresponds to a codebook-based uplink transmission or a non-codebook-based uplink transmission.

In addition, the above configuration information may include configuration information related to STRP PUSCH transmission or multi-panel (i.e., STxMP) PUSCH transmission described in the proposed method described below.

The UE may receive downlink control information (DCI) from the network through/using TRP 1 (and/or TRP 2) (S702).

The DCI may be transmitted via a downlink control channel (e.g., PDCCH) and may schedule a STRP PUSCH transmission or a multi-panel (STxMP) PUSCH transmission (i.e., including a UL grant).

Additionally, the DCI may include a sounding reference signal (SRS) resource set indicator field, a first precoding-related field, and a second precoding-related field.

Here, based on the value of the SRS resource set indicator field, it may be indicated whether the PUSCH transmission scheduled by the DCI is a STRP PUSCH transmission (e.g., the value of the SRS resource set indicator field is 00 or 01) or a multi-panel (STxMP) PUSCH transmission (e.g., the value of the SRS resource set indicator field is 10 or 11).

In addition, when the PUSCH transmission is a codebook-based transmission, the first precoding-related field and the second precoding-related field may correspond to a first precoding information and number of layers field and a second precoding information and number of layers field, respectively.

In addition, when the PUSCH transmission is a non-codebook-based transmission, the first precoding-related field and the second precoding-related field may correspond to a first sounding reference signal (SRS) resource indicator field and a second SRS resource indicator field, respectively.

A precoder and/or rank applied across one or more layers for a first panel may be indicated/determined by the first precoding-related field, and a precoder and/or rank applied across one or more layers for a second panel may be indicated/determined by the second precoding-related field.

The UE may transmit a PUSCH to the network through/using TRP 1 (and/or TRP 2) (S703).

Here, in case of STRP PUSCH transmission, the UE may perform STRP PUSCH transmission to the network through/using a single TRP according to the scheduling of DCI based on a single spatial relationship RS (or UL TCI state).

Alternatively, in case of multi-panel (STxMP) PUSCH transmission, the UE may perform multi-panel (STxMP) PUSCH transmission (SDM mode or SFN mode) to the network through/using multiple TRPs using multiple panels according to scheduling of DCI based on different spatial relationship RSs (or different UL TCI states).

## Power control of uplink data channels

Hereinafter, a method for controlling power when a UE performs a PUSCH transmission is described. It should be noted that the method described below can be extended and applied to other uplink data channels supported in a wireless communication system.

In the case of PUSCH transmission in the active UL BWP of the carrier (f) of the serving cell (c), the UE may calculate the linear power value of the transmission power determined by the following Equation 3. Thereafter, the UE may control the transmission power by considering the number of antenna ports and/or the number of SRS ports, etc. based on the calculated linear power value.

【Equation 3】

$$P_{\text{PUSCH},b,f,c}(i,j,q_d,l)$$

$$= min \begin{cases} P_{\text{CMAX},f,c}(i), \\ P_{\text{O\_PUSCH},b,f,c}(j) + 10\,log_{10}(2^{\mu} \cdot M_{\text{RB},b,f,c}^{\text{PUSCH}}(i)) + \alpha_{b,f,c}(j) \cdot PL_{b,f,c}(q_d) + \Delta_{\text{TF},b,f,c}(i) + f_{b,f,c}(i,l) \end{cases}$$

Specifically, when a UE performs PUSCH transmission in an active UL BWP (b) of a carrier (f) of a serving cell (c) using a parameter set configuration based on an index j and a PUSCH power control adjustment state based on an index l, the UE may determine a PUSCH transmission power $P_{\text{PUSCH},b,f,c}(i,j,q_d,l)$ (dBm) in a PUSCH transmission occasion (i) based on Equation 3.

In Equation 3, the index j represents an index for an open-loop power control parameter (e.g., Po, alpha ($\alpha$), etc.), and up to 32 sets of parameters can be set per cell. The index q_d represents an index of a DL RS resource for path loss (PL) measurement (e.g., $PL_{b,f,c}(q_d)$), and up to four measurements can be configured per cell. The index 1 represents an index for a closed-loop power control process, and up to two processes can be configured per cell.

Specifically, Po (e.g., $P_{\text{O\_PUSCH},b,f,c}(j)$) is a parameter broadcast as part of system information and may indicate the target reception power at the receiving end. The Po value may be configured by considering the UE's throughput, cell capacity, noise, and/or interference.

In addition, alpha (e.g., $\alpha_{b,f,c}(j)$) may represent a rate at which compensation for path loss is performed. Alpha may be configured to a value from 0 to 1, and depending on the configured value, full path loss compensation or fractional path loss compensation may be performed. In this case, the alpha value may be configured in consideration of interference between UEs and/or data rates. In addition, $P_{\text{CMAX},f,c}(i)$ may represent a configured UE transmit power.

For example, the configured UE transmission power may be interpreted as a predefined 'configured maximum UE output power'. In addition, $M_{\text{RB},b,f,c}^{\text{PUSCH}}(i)$ may represent a bandwidth of PUSCH resource allocation expressed as the number of resource blocks (RBs) for PUSCH transmission opportunities based on a subcarrier spacing ($\mu$). In addition, $f_{b,f,c}(i,l)$ related to a PUSCH power control adjustment state may be configured or indicated based on a TPC command field of DCI (e.g., DCI format 0_0, DCI format 0_1, DCI format 2_2, DCI format 2_3, etc.).

In this case, a specific RRC parameter (e.g., 'SRI-PUSCHPowerControl-Mapping', etc.) may indicate a linkage between the SRI field of the DCI and the above-described indices j, q_d, l. That is, the above-described indices j, l, q_d, etc. may be associated with a beam, a panel, and/or a spatial domain transmission filter, etc. based on specific information. Through this, PUSCH transmission power control in units of beam, panel, and/or spatial domain transmission filter may be performed.

The parameters and/or information for the above-described PUSCH power control may be individually (i.e., independently) configured for each BWP. In this case, the parameters and/or information may be configured or indicated via higher layer signaling (e.g., RRC signaling, MAC-CE, etc.) and/or DCI, etc. For example, the parameters and/or information for PUSCH power control may be conveyed via RRC signaling 'PUSCH-ConfigCommon', 'PUSCH-Power-Control', etc.

Through the method described above, the UE may determine or calculate PUSCH transmission power, and transmit PUSCH using the determined or calculated PUSCH transmission power.

Method for configuring/defining maximum transmission power per slot

As described above, the UL STxMP method may be divided into an S-DCI-based STxMP method in which two panels transmit a UL channel scheduled by one DCI, and an M-DCI-based STxMP method in which two panels transmit two UL channels scheduled by different DCIs.

Specifically, the M-DCI-based STxMP method means a method in which UL channel 0 associated with "CORESET full index = 0" and UL channel 1 associated with "CORESET full index = 0" transmit at the same time. Here, UL channel 0 and each of the UL channels may be one of PUSCH, PUCCH, or SRS.

Here, the UL channel 0 associated with the "CORESET pool index = 0" may include a UL channel scheduled through the CORESET(s) belonging to the "CORESET pool index = 0", a UL channel directly associated with the "CORESET pool index = 0" configured/indicated, or/and a UL channel directly associated with the "SRS resource set ID/index = 0" set/indicated. In this case, the "SRS resource set ID/index = 0" may be associated with the "CORESET pool index = 0".

And, UL channel 1 associated with "CORESET pool index = 1" may include UL channels scheduled through CORESET(s) belonging to "CORESET pool index = 1", UL channels directly associated with "CORESET pool index = 1", or/and UL channels directly associated with "SRS resource set ID/index = 1". In this case, "SRS resource set ID/index = 1" may be associated with "CORESET pool index = 1".

The M-DCI-based STxMP method may be classified into non-ideal BH (i.e., delay of tens or hundreds of msec or more) and ideal BH (i.e., delay of 1 msec or less) depending on the link delay assumption of the backhaul (BH) between TRPs that manage/use each CORESET pool.

When M-DCI-based STxMP is applied to a non-ideal BH, it may be difficult for each TRP scheduling UL channel 0 and UL channel 1 to determine the UL channel scheduling status of the other TRP. That is, TRP 0 managing/using CORESET pool 0 cannot determine whether UL channel 1 is scheduled or its scheduling status. In addition, TRP 1 managing/using CORESET pool 1 cannot determine whether UL channel 0 is scheduled or its scheduling status.

The above-described situation has a problem in that it reduces the maximum value of the UL power that each panel can transmit by half. For example, it is assumed that each of UL channel 0 and UL channel 1 is a PUSCH, and the power control method of each PUSCH is the PUSCH power control method described above. The Pcmax value according to the Equation 3 means the maximum value of the UL power that can be allocated to the PUSCH. In the STxMP situation where UL channel 0 and UL channel 1 are transmitted simultaneously, if the power of each UL channel is determined as Pcmax, the UE must transmit two UL channels with a total value of 2 * Pcmax. If an implementation method in which the maximum transmission power of the UE is shared by two panels is applied, the UE cannot transmit two UL channels with a value of 2 * Pcmax at one time. That is, in a method in which the maximum transmission power of the UE is shared by two panels, the sum of the transmission powers of the two panels cannot exceed Pcmax. Accordingly, Pcmax may not be used as is in non-ideal BH situations where M-DCI-based STxMP is applied.

Therefore, in the above-described situation, when the STxMP method is applied, it may be necessary to reduce the maximum value of the UL power of each panel by half. That is, the UE may perform UL power control for each panel using Pcmax/2 instead of Pcmax.

Here, in the M-DCI-based STxMP situation, which is a non-ideal BH, each TRP may not know the UL channel scheduling situation of the other TRP, and thus may not be able to determine whether STxMP is currently configured/in progress. Accordingly, each TRP may configure the maximum transmission power value of its UL channel to Pcmax/2, assuming the STxMP situation.

In order to solve the above-described problem, the following describes a method in which a base station configures/indicates a UE to configure a slot/symbol in which UL channel 0 cannot be transmitted, a slot/symbol in which UL channel 1 cannot be transmitted, and a slot/symbol in which both UL channel 0 and UL channel 1 can be transmitted.

FIG. 8 is a diagram for describing an uplink transmission operation of a UE in a wireless communication system to which the present disclosure can be applied.

The UE may receive from the base station first information related to at least one first time unit in which a first uplink (UL) channel is schedulable and at least one second time unit in which a second UL channel is schedulable(S810).

Here, the first information may be transmitted to the terminal via an RRC (radio resource control) message, a MAC (medium access control)-CE (control element), or DCI (downlink control information). In addition, each of the first UL channel and the second UL channel may be one of a physical uplink control channel (PUCCH), a physical uplink shared channel (PUSCH), or a sounding reference signal (SRS).

As an example of the present disclosure, a time unit may be one of a slot or a symbol. That is, the UE may receive first information from the base station regarding a slot/symbol capable of scheduling the first UL channel and/or the second UL channel. As an example, the first information may include a bitmap indicating whether scheduling of at least one of the first UL channel or the second UL channel is possible for each time unit.

However, this is only one embodiment, and the UE may include information about a time unit in which the first information cannot schedule the first UL channel, a time unit in which the second UL channel cannot be scheduled, and a time unit in which both the first UL channel and the second UL channel can be scheduled.

As an example of the present disclosure, a third time unit may exist in which the first time unit and the second time unit overlap. That is, the third time unit in which the first time unit and the second time unit overlap may mean a time unit in which both the first UL channel and the second UL channel can be scheduled. In the third time unit, "maximum transmit power for predefined UL transmission (Pcmax) * $\alpha$ $(0 \leq \alpha \leq 1)$" may be applied as the maximum transmit power for the first UL channel, and "Pcmax * $\beta (0 \leq \beta \leq 1)$" may be applied as the maximum transmit power for the second UL channel. Here, $\beta$ may be defined as "1-$\alpha$", but is not limited thereto.

And, Pcmax may be applied as the maximum transmission power for the first UL channel in the first time unit, and Pcmax may be applied as the maximum transmission power for the second UL channel in the second time unit.

The UE may transmit at least one of the first UL channel or the second UL channel to the base station based on the first information (S820).

As an example of the present disclosure, the UE may receive control information from the base station for scheduling each of the first UL channel and the second UL channel on a third time unit. That is, the UE may receive control information from the base station for scheduling simultaneous transmission of the first UL channel and the second UL channel on a third time unit.

Here, the UJ may perform a group-based beam reporting operation. That is, the UE may transmit second information related to a simultaneously applicable spatial parameter pair to the base station. For example, the UE may transmit a first spatial parameter (e.g., a first beam or a first spatial filter) and a second spatial parameter (e.g., a second beam or a second spatial filter) as a simultaneously applicable spatial parameter pair to the base station. Here, the first spatial parameter may be configured for the first UL channel scheduled in the third time unit, and the second spatial parameter may be configured for the second UL channel scheduled in the third time unit.

That is, the UE m ay simultaneously transmit a first UL channel to which a first spatial parameter is applied and a second UL channel to which a second spatial parameter is applied to the base station in a third time unit.

As an example of the present disclosure, based on the scheduling of the first UL channel and the second UL channel on the third time unit, each of $\alpha$ and $\beta$ may be 0.5. That is, the maximum transmission power of each of the first UL channel and the second UL channel may be configured/defined as 0.5 Pcmax.

As another example of the present disclosure, assume that $\alpha$ and $\beta$ are each 1 and a first UL channel and a second UL channel are scheduled on a third time unit. In this case, based on the sum of the transmission powers of the first UL channel and the second UL channel exceeding Pcmax, the transmission power of a specific UL channel with a lower priority among the first UL channel and the second UL channel may be scaled or the specific UL channel may be dropped.

Here, the priority of each of the first UL channel and the second UL channel may be determined based on the CORESET full index corresponding to each of the first UL channel and the second UL channel or the type of each of the first UL channel and the second UL channel. The priority of a UL channel having a lower (or higher) associated CORESET full index may be set/defined as being higher. As another example, the types of UL channels may be prioritized in the order of PUCCH, PUSCH, and SRS.

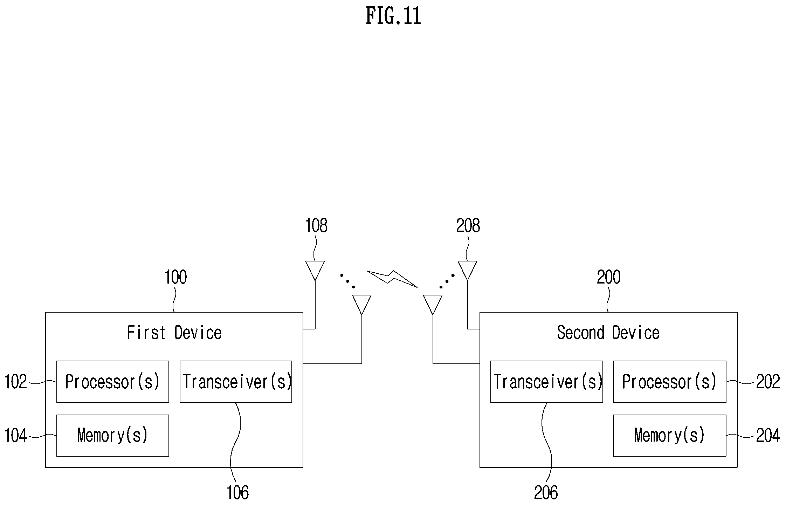

The method performed by the UE described in the example of FIG. 8 may be performed by the first device (100) of FIG. 11. For example, one or more processors (102) of the first device (100) of FIG. 11 may receive, from a base station through one or more transceivers (106), first information related to at least one first time unit in which a first UL channel may be scheduled and at least one second time unit in which a second UL channel may be scheduled. The one or more processors (102) may transmit, to the base station through one or more transceivers (106), at least one of the first UL channel or the second UL channel based on the first information.

The above memory (104) can store instructions for performing the method described in the example of FIG. 8 when executed by one or more processors (102).

FIG. 9 is a diagram for describing an uplink reception operation of a base station in a wireless communication system to which the present disclosure can be applied.

The base station may transmit to the UE first information related to at least one first time unit in which a first UL channel is schedulable and at least one second time unit in which a second UL channel is schedulable (S910).

The base station may transmit the first information to the terminal via one of an RRC message, MAC-CE, or DCI. Accordingly, the base station may configure/indicate whether scheduling of at least one of the first UL channel or the second UL channel is possible for each time unit.

The base station may receive at least one of the first UL channel or the second UL channel from the terminal based on the first information (S920).

Specifically, the base station may transmit information to the UE for scheduling at least one of the first UL channel or the second UL channel for each time unit according to the first information. The base station may receive the first UL channel and/or the second UL channel from the terminal based on the maximum transmission power configured/defined for each time unit.

The method performed by the base station described in the example of FIG. 9 may be performed by the second device (200) of FIG. 11. For example, one or more processors (202) of the second device (200) of FIG. 11 may transmit first information related to at least one first time unit in which a first UL channel may be scheduled and at least one second time unit in which a second UL channel may be scheduled to a UE via one or more transceivers (206). The one or more processors (202) may receive at least one of the first UL channel or the second UL channel from the UE via one or more transceivers (206) based on the first information.

Furthermore, one or more memories (204) of the second device (200) may store commands for performing the method described in the example of FIG. 9 when executed by one or more processors (202).

Hereinafter, a method for setting/indicating a UL channel that may be transmitted by symbol/slot is described in detail.

Embodiment 1

Embodiment 1 relates to a procedure for setting/indicating a UL channel that can be transmitted symbol/slot-wise.

The base station may semi-statically configure information about the type of UL channel that can be transmitted per slot/symbol to the UE via RRC signaling (or SIB, etc.). However, this is only an example, and the base station may dynamically configure information about the type of UL channel that can be transmitted per slot/symbol to the UE via DCI/MAC-CE.

As an example of the present disclosure, as illustrated in FIG. 10, the base station may transmit information to the UE indicating that UL channel 0 cannot be transmitted in slots 0, 1, and 8, UL channel 1 cannot be transmitted in slots 2, 3, and 9, and UL channels 0 and 1 can be transmitted in slots 4, 5, 6, and 7.

As illustrated in FIG. 10, the information transmitted from the base station to the UE may be configured in the form of a bitmap indicating whether UL channel 0 or/and UL channel 1 can be transmitted in units of 10 slots. The bitmap may be configured with 2 bits per slot, and may include a total of 20 bits. That is, the information may be repeatedly applied again starting from slot 10, which is the slot following slot 9.

For example, the 2-bit values for each slot included in the bitmap may be set to "00", "01", and "10". For example, if the 2-bit value corresponding to slot n (e.g., n is an integer greater than or equal to 0 and less than or equal to 9) (or symbol n) is set to "00", this may indicate that channel 0 cannot be transmitted in slot n (or symbol n). If the 2-bit value corresponding to slot n (or symbol n) is set to "01", this may indicate that channel 1 cannot be transmitted in slot n (or symbol n). If the 2-bit value corresponding to slot n (or symbol n) is set to "10", this may indicate that UL channel 0 and UL channel 1 can be transmitted in slot n (or symbol n).

However, this is only one embodiment, and each of the 2-bit values "00", "01", and "10" corresponding to slot n (or symbol n) may correspond to "information indicating that UL channel 0 cannot be transmitted in slot n (or symbol n)", "information indicating that UL channel 1 cannot be transmitted in slot n (or symbol n)", and "information indicating that UL channel 0 and UL channel 1 can be transmitted in slot n (or symbol n)".

Additionally, when the 2-bit value corresponding to slot n (or symbol n) is set to "11", this may indicate that slot n (or symbol n) is a slot that can be flexibly set. Whether UL channel 0 or UL channel 1 cannot be transmitted on a flexible slot (or symbol) and whether both UL channel 0 and UL channel 1 can be transmitted may be indicated dynamically through MAC-CE or DCI, etc. That is, when the 2-bit value corresponding to slot n (or symbol n) is set to "11", it may be indicated whether UL channel 0 or UL channel 1 cannot be transmitted on slot n (or symbol n) and whether both UL channel 0 and UL channel 1 can be transmitted.

Embodiment 1-1

Embodiment 1-1 relates to the Pcmax value applied to each slot configured according to Embodiment 1.

As an example of the present disclosure, UL channel 1 may be transmitted in a slot/symbol in which UL channel 0 cannot be transmitted. In the case where only UL channel 1 is transmitted, the STxMP method is not applied, and thus Pcmax may be applied as the maximum transmission value of the UL channel.

As another example of the present disclosure, UL channel 0 may be transmitted in a slot/symbol in which UL channel 1 cannot be transmitted. In the case where only UL channel 0 is transmitted, the STxMP method is not applied, and thus Pcmax may be applied as the maximum transmission value of the UL channel.

In a slot/symbol where both UL channels 0 and 1 can be transmitted, UL channels 0 and UL channels 1 can be transmitted simultaneously (i.e., STxMP-based transmission). Therefore, the maximum transmission power value of each UL channel can be applied as Pcmax/2. As another example, the maximum transmission power value of UL channel 0 can be applied as "Pcmax * alpha(0<alpha<1)", and the maximum transmission power value of UL channel 1 can be applied as "Pcmax * (1-alpha) (0<alpha<1)".

Embodiment 1-2

Embodiment 1-2 relates to a method of dynamically transmitting information related to whether UL channel transmission is possible for each slot/symbol.

More than one TRP may exist within a CORESET pool, and the TRPs may perform UL/DL scheduling or receive UL channels through dynamic switching. For example, when UL TCI states 0 to 7 are set to be available (i.e., activated) in a CORESET pool with a CORESET pool index value of 0, UL TCI states 0 to 3 may indicate a UL beam (i.e., a UL spatial parameter) toward TRP 0_0, and UL TCI states 4 to 7 may indicate a UL beam toward TRP 0_1. In this case, when the UL TCI state value of UL channel 0 is 4, the corresponding UL channel 0 may be transmitted as TRP 0_0, and when the UL TCI state value of UL channel 0 is 4, the corresponding UL channel 0 may be transmitted as TRP 0_1.

The above-described UL TCI indication is performed via dynamic signaling (e.g., DCI or/and MAC-CE), so that the TRP pairs of each of CORESET pool 0 and CORESET pool 1 can dynamically change. Accordingly, whether UL channel transmission is possible for each slot/symbol can be dynamically indicated.

As an example of the present disclosure, whether transmission of UL channel 0 and/or UL channel 1 is not possible for each slot/symbol and whether transmission of both UL channel 0 and UL channel 1 is possible can be indicated via DCI/MAC-CE.

As another example of the present disclosure, a configuration 1 indicating that UL channel 0 cannot be transmitted (per slot/symbol), a configuration 2 indicating that UL channel 1 cannot be transmitted, and a configuration 3 indicating that transmission of both UL channel 0 and UL channel 1 is possible may be transmitted from a base station to a terminal via RRC signaling. Then, the base station may transmit a MAC-CE/DCI including information for selecting one of configuration 1, configuration 2, or configuration 3 (per slot/symbol) to the UE.

Embodiment 1-3

Embodiment 1-3 relate to a new area that can be set per slot/symbol.

As described in Embodiment 1, Embodiment 1-1, and Embodiment 1-2, it can be set/indicated whether UL channel 0/UL channel 1 cannot be transmitted for each slot/symbol and whether transmission of both UL channel 0 and UL channel 1 is possible. That is, the slot/symbol can be divided into an area where UL channel 0 cannot be transmitted (i.e., a first area), an area where UL channel 1 cannot be transmitted (i.e., a second area), and an area where UL channel 0 and UL channel 1 can be transmitted (i.e., a third area).

Additionally or alternatively, a symbol/slot (i.e., a fourth region) may be configured/indicated in which both UL channel 0 and UL channel 1 may be transmitted, and there is no maximum transmission power limitation (e.g., Pcmax/2 per UL channel) for UL channel 0 and UL channel 1. In this case, power allocation priority may be configured to either UL channel 0 or UL channel 1.

For example, assume that priority exists in UL channel 0. Assuming that the maximum transmission power of each of UL channel 0 and UL channel 1 is both Pcmax, each UL channel can be scheduled. In this case, if the sum of the transmission powers of each of UL channel 0 and UL channel 1 exceeds Pcmax, the terminal can scale the power of the UL channel with a lower priority (e.g., UL channel 1) or drop the UL channel.

The priority of each UL channel may be determined based on the TRP ID/CORESET full index/SRS resource set index. For example, a UL channel having a higher (or lower) TRP ID/CORESET full index/SRS resource set index may be configured/defined to have a higher priority. As another example, the base station may set priorities for each UL channel. As another example, the priority of each UL channel/RS may be determined based on a combination of simultaneously transmitted UL channels/RS. As another example, a high priority may be set/defined based on the order of PUCCH, PUSCH, and SRS.

There is no limit on the maximum transmission power (e.g., "Pcmax/2") on one or more symbols/slots configured as the 4th region, and since the scheduling situation is unknown between TRPs, a TRP with a lower priority may not perform a transmission operation or may conservatively transmit unimportant resources/information. In addition, a TRP with a higher priority may freely perform scheduling on the UL channel on one or more symbols/slots set as the 4th region.

Embodiment 1-4

Embodiment 1-4 relate to a group-based beam reporting procedure.

The UE may report information about simultaneously transmittable UL beams (e.g., spatial parameters, etc.) to the base station through group-based beam reporting operation. In a slot symbol in which both UL channels 0 and 1 can be transmitted, the UE may transmit UL channel 0 and UL channel 1 to the base station using two simultaneously transmittable UL beams (e.g., UL beam 0 and UL beam 1) previously reported through group-based beam reporting.

For this purpose, the base station may configure beam 0 to UL channel 0 and beam 1 to UL channel 1. If a beam pair other than beam 0 and beam 1 is configured to UL channel 0 and UL channel 1, STxMP transmission may not be possible. Therefore, the UE may expect the base station to set beam 0 and beam 1 to UL channels 0 and 1, respectively, in a slot/symbol in which both UL channel 0 and UL channel 1 can be transmitted.

Additionally or alternatively, the terminal may not expect the base station to set other beam pairs other than beam 0 and 1 on UL channel 0 and UL channel 1, respectively, in slots/symbols in which both UL channel 0 and UL channel 1 can be transmitted. That is, the terminal may expect that the remaining beam pairs, except for the beam pairs reported as being capable of simultaneous transmission through group-based beam reporting, are not applied to UL channel 0 and UL channel 1.

General Device to which the Present Disclosure may be applied

FIG. 11 illustrates a block diagram of a wireless communication device according to an embodiment of the present disclosure.

In reference to FIG. 11, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, the processor 102 may process the information in the memory 104 to generate first information/-signal and then transmit a wireless signal including the first information/signal through the transceiver 106. Additionally, the processor 102 may receive a wireless signal including the second information/signal through the transceiver 106 and then store information obtained from signal processing of the second information/signal in the memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a user equipment (UE) in a wireless communication system, the method comprising:

> receiving, from a base station, first information related to at least one first time unit in which a first uplink (UL) channel is schedulable and at least one second time unit in which a second UL channel is schedulable; and
> transmitting, to the base station, at least one of the first UL channel or the second UL channel based on the first information,
> wherein, in a third time unit where the first time unit and the second time unit overlap: "Predefined maximum transmission power for UL transmission (Pcmax) * $\alpha(0 \leq \alpha \leq 1)$" is applied as a maximum transmission power for the first UL channel, and "Predefined maximum transmission power for UL transmission * $\beta (0 \leq \beta \leq 1)$" is applied as a maximum transmission power for the second UL channel.

2. The method of claim 1, wherein:
the first information includes a bitmap indicating whether scheduling of at least one of the first UL channel or the second UL channel is possible for each time unit.

3. The method of claim 1, wherein:

> in the first time unit, "Predefined maximum transmission power for UL transmission" is applied as the maximum transmission power for the first UL channel, and
> in the second time unit, "Predefined maximum transmission power for UL transmission" is applied as the maximum transmission power for the second UL channel.

4. The method of claim 1, wherein:
the first information is transmitted to the UE through an radio resource control (RRC) message, medium access control-element (MAC-CE) or downlink control information (DCI).

5. The method of claim 1, wherein:
based on the first UL channel and the second UL channel being scheduled on the third time unit, each of the $\alpha$ and the $\beta$ is 0.5.

6. The method of claim 1, wherein:
based on each of the $\alpha$ and the $\beta$ being 1 and the first UL channel and the second UL channel being scheduled on the third time unit:
based on a sum of transmission powers of the first UL channel and the second UL channel exceeding a "predefined maximum transmission power for UL transmission", a transmission power of a specific UL channel having a lower priority among the first UL channel and the second UL channel is scaled or the specific UL channel is dropped.

7. The method of claim 6, wherein:

a priority of each of the first UL channel and the second UL channel is determined based on a control resource set (CORESET) pool index corresponding to each of the first UL channel and the second UL channel or a type of each of the first UL channel and the second UL channel.

8. The method of claim 1, wherein:
the $\beta$ is defined as "1-$\alpha$".

9. The method of claim 1, wherein:
second information related to a pair of simultaneously applicable spatial parameters is transmitted from the UE to the base station.

10. The method of claim 9, wherein:
based on a first spatial parameter and a second spatial parameter being transmitted to the base station as the pair of simultaneously applicable spatial parameters:

the first spatial parameter is configured for the first UL channel scheduled in the third time unit, and
the second spatial parameter is configured for the second UL channel scheduled in the third time unit.

11. The method of claim 1, wherein:
each of the first UL channel and the second UL channel is one of a physical uplink control channel (PUCCH), a physical uplink shared channel (PUSCH), or a sounding reference signal (SRS).

12. The method of claim 1, wherein:
the time unit is either a symbol or a slot.

13. A user equipment (UE) in a wireless communication system, the UE comprising:

at least one transceiver; and
at least one processor coupled to the at least one transceiver;
wherein the at least one processor is configured to:

receive, from a base station through the at least one transceiver, first information related to at least one first time unit in which a first uplink (UL) channel is schedulable and at least one second time unit in which a second UL channel is schedulable; and
transmit, to the base station through the at least one transceiver, at least one of the first UL channel or the second UL channel based on the first information,
wherein, in a third time unit where the first time unit and the second time unit overlap: "Predefined maximum transmission power for UL transmission (Pcmax) * $\alpha$ ($0 \leq \alpha \leq 1$)" is applied as a maximum transmission power for the first UL channel, and "Predefined maximum transmission power for UL transmission * $\beta$ ($0 \leq \beta \leq 1$)" is applied as a maximum transmission power for the second UL channel.

14. A method performed by a base station in a wireless communication system, the method comprising:

transmitting, to a user equipment (UE), first information related to at least one first time unit in which a first uplink (UL) channel is schedulable and at least one second time unit in which a second UL channel is schedulable; and
receiving, from the UE, at least one of the first UL channel or the second UL channel based on the first information,
wherein, in a third time unit where the first time unit and the second time unit overlap: "Predefined maximum transmission power for UL transmission (Pcmax) * $\alpha$ ($0 \leq \alpha \leq 1$)" is applied as a maximum transmission power for the first UL channel, and "Predefined maximum transmission power for UL transmission * $\beta$ ($0 \leq \beta \leq 1$)" is applied as a maximum transmission power for the second UL channel.

15. A base station in a wireless communication system, the base station comprising:

at least one transceiver; and
at least one processor coupled to the at least one transceiver;
wherein the at least one processor is configured to:

transmit, to a user equipment (UE) through the at least one transceiver, first information related to at least one first time unit in which a first uplink (UL) channel is schedulable and at least one second time unit in which a second UL channel is schedulable; and

receive, from the UE through the at least one transceiver, at least one of the first UL channel or the second UL channel based on the first information,

wherein, in a third time unit where the first time unit and the second time unit overlap: "Predefined maximum transmission power for UL transmission (Pcmax) * $\alpha$ ($0 \leq \alpha \leq 1$)" is applied as a maximum transmission power for the first UL channel, and "Predefined maximum transmission power for UL transmission * $\beta$ ($0 \leq \beta \leq 1$)" is applied as a maximum transmission power for the second UL channel.

16. A processing device configured to control a user equipment (UE) in a wireless communication system, the processing device comprising:

at least one processor; and

at least one computer memory operatively coupled to the at least one processor and storing instructions for performing operations upon being executed by the at least one processor,

wherein the operations comprise:

receiving, from a base station, first information related to at least one first time unit in which a first uplink (UL) channel is schedulable and at least one second time unit in which a second UL channel is schedulable; and

transmitting, to the base station, at least one of the first UL channel or the second UL channel based on the first information,

wherein, in a third time unit where the first time unit and the second time unit overlap: "Predefined maximum transmission power for UL transmission (Pcmax) * $\alpha$ ($0 \leq \alpha \leq 1$)" is applied as a maximum transmission power for the first UL channel, and "Predefined maximum transmission power for UL transmission * $\beta$ ($0 \leq \beta \leq 1$)" is applied as a maximum transmission power for the second UL channel.

17. At least one non-transitory computer readable medium storing at least one instruction, wherein:

the at least one instruction executed by at least one processor controls a device in a wireless communication system to perform:

receiving, from a base station, first information related to at least one first time unit in which a first uplink (UL) channel is schedulable and at least one second time unit in which a second UL channel is schedulable; and

transmitting, to the base station, at least one of the first UL channel or the second UL channel based on the first information,

wherein, in a third time unit where the first time unit and the second time unit overlap: "Predefined maximum transmission power for UL transmission (Pcmax) * $\alpha$ ($0 \leq \alpha \leq 1$) " is applied as a maximum transmission power for the first UL channel, and "Predefined maximum transmission power for UL transmission * $\beta$ ($0 \leq \beta \leq 1$)" is applied as a maximum transmission power for the second UL channel.

# FIG.1

# FIG.2

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG.4

# FIG.5

# FIG.6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601

S602

S603

S604

S605

S606

S607

S608

· DL/UL ACK/NACK
· UE CQI/PMI RI REPORT
  USING PUSCH AND PUCCH

## FIG.7

Network                                        UE

CONFIGURATION     S701
INFORMATION

DOWNLINK CONTROL   S702
INFORMATION

PUSCH            S703
TRANSMISSION

## FIG.8

RECEIVING, FROM THE BASE STATION, FIRST
INFORMATION RELATED TO AT LEAST ONE
FIRST TIME UNIT IN WHICH A FIRST UL
CHANNEL IS SCHEDULABLE AND AT LEAST        S810
ONE SECOND TIME UNIT IN WHICH A SECOND
UL CHANNEL IS SCHEDULABLE

TRANSMITTING AT LEAST ONE OF THE FIRST
UL CHANNEL OR THE SECOND UL CHANNEL
TO THE BASE STATION BASED ON THE FIRST     S820
INFORMATION

## FIG.9

TRANSMITTING TO THE UE FIRST INFORMATION RELATED TO AT LEAST ONE FIRST TIME UNIT IN WHICH A FIRST UL CHANNEL IS SCHEDULABLE AND AT LEAST ONE SECOND TIME UNIT IN WHICH A SECOND UL CHANNEL IS SCHEDULABLE — S910

RECEIVING AT LEAST ONE OF THE FIRST UL CHANNEL OR THE SECOND UL CHANNEL FROM THE TERMINAL BASED ON THE FIRST INFORMATION — S920

## FIG.10

| 0 | 0 | 1 | 1 | | | | | 0 | 1 | → slot |
| 0 | 1 | 2 | 3 | 4 | 5 | 6 | 7 | 8 | 9 | |

▨ Slot(s) where UL channel 0 cannot be transmitted

▧ Slot(s) where UL channel 1 cannot be transmitted

▨ Slot(s) in which UL channels 0 and 1 can be transmitted

FIG.11

## INTERNATIONAL SEARCH REPORT

| International application No. |
|---|
| **PCT/KR2024/010907** |

**A. CLASSIFICATION OF SUBJECT MATTER**

**H04W 52/34**(2009.01)i; **H04W 52/36**(2009.01)i; **H04W 52/14**(2009.01)i; **H04W 52/32**(2009.01)i; **H04W 52/42**(2009.01)i; **H04B 7/0426**(2017.01)i; **H04W 72/0446**(2023.01)i; **H04W 72/1268**(2023.01)i; **H04W 72/231**(2023.01)i; **H04W 72/232**(2023.01)i

According to International Patent Classification (IPC) or to both national classification and IPC

**B. FIELDS SEARCHED**

Minimum documentation searched (classification system followed by classification symbols)

H04W 52/34(2009.01); H04B 7/06(2006.01); H04B 7/26(2006.01); H04J 11/00(2006.01); H04W 72/04(2009.01); H04W 72/12(2009.01); H04W 76/15(2018.01); H04W 76/27(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 상향링크 채널(uplink channel), 스케줄링(scheduling), 시간 유닛(time unit), 중복 (overlap), 최대 전송 전력(maximum transmission power)

**C. DOCUMENTS CONSIDERED TO BE RELEVANT**

| Category* | Citation of document, with indication, where appropriate, of the relevant passages | Relevant to claim No. |
|---|---|---|
| A | KR 10-2018-0041132 A (QUALCOMM INCORPORATED) 23 April 2018 (2018-04-23) See paragraphs [0100]-[0113]; claims 1 and 6; and figures 14-17. | 1-17 |
| A | KR 10-1587508 B1 (KT CORPORATION) 22 January 2016 (2016-01-22) See paragraphs [0124]-[0134]; and figure 11. | 1-17 |
| A | KR 10-2022-0091206 A (SAMSUNG ELECTRONICS CO., LTD.) 30 June 2022 (2022-06-30) See paragraphs [0357]-[0364]; and figures 13-14. | 1-17 |
| A | KR 10-2020-0033338 A (HUAWEI TECHNOLOGIES CO., LTD.) 27 March 2020 (2020-03-27) See paragraphs [0064]-[0133]; and figures 5-13b. | 1-17 |
| A | KR 10-2019-0024994 A (SAMSUNG ELECTRONICS CO., LTD.) 08 March 2019 (2019-03-08) See paragraphs [0046]-[0056]; and figures 2-3. | 1-17 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **07 November 2024** | **07 November 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/010907**

| Patent document cited in search report | | | Publication date (day/month/year) | Patent family member(s) | | | Publication date (day/month/year) |
|---|---|---|---|---|---|---|---|
| KR | 10-2018-0041132 | A | 23 April 2018 | BR | 112018002974 | A2 | 25 September 2018 |
| | | | | CN | 107925545 | A | 17 April 2018 |
| | | | | CN | 107925545 | B | 17 November 2020 |
| | | | | EP | 3338393 | A1 | 27 June 2018 |
| | | | | EP | 3338393 | B1 | 26 January 2022 |
| | | | | ES | 2905903 | T3 | 12 April 2022 |
| | | | | JP | 2018-528676 | A | 27 September 2018 |
| | | | | JP | 7068163 | B2 | 16 May 2022 |
| | | | | US | 11191097 | B2 | 30 November 2021 |
| | | | | US | 2017-0055281 | A1 | 23 February 2017 |
| | | | | WO | 2017-030712 | A1 | 23 February 2017 |
| KR | 10-1587508 | B1 | 22 January 2016 | CN | 104769866 | A | 08 July 2015 |
| | | | | CN | 104769866 | B | 22 December 2017 |
| | | | | CN | 104853424 | A | 19 August 2015 |
| | | | | CN | 104853424 | B | 04 June 2019 |
| | | | | KR | 10-2014-0047510 | A | 22 April 2014 |
| | | | | US | 2014-0105130 | A1 | 17 April 2014 |
| | | | | US | 2014-0105141 | A1 | 17 April 2014 |
| | | | | US | 9379874 | B2 | 28 June 2016 |
| | | | | US | 9967079 | B2 | 08 May 2018 |
| | | | | WO | 2014-058257 | A1 | 17 April 2014 |
| KR | 10-2022-0091206 | A | 30 June 2022 | EP | 4250828 | A1 | 27 September 2023 |
| | | | | US | 2024-0049151 | A1 | 08 February 2024 |
| | | | | WO | 2022-139162 | A1 | 30 June 2022 |
| KR | 10-2020-0033338 | A | 27 March 2020 | CN | 109952800 | A | 28 June 2019 |
| | | | | CN | 109952800 | B | 25 May 2021 |
| | | | | CN | 113346987 | A | 03 September 2021 |
| | | | | CN | 113346987 | B | 28 April 2023 |
| | | | | CN | 113473617 | A | 01 October 2021 |
| | | | | EP | 3661285 | A1 | 03 June 2020 |
| | | | | EP | 3661285 | A4 | 05 August 2020 |
| | | | | EP | 3661285 | B1 | 05 May 2021 |
| | | | | EP | 3908062 | A1 | 10 November 2021 |
| | | | | EP | 3908062 | A4 | 10 November 2021 |
| | | | | EP | 3908062 | B1 | 12 April 2023 |
| | | | | EP | 4192169 | A1 | 07 June 2023 |
| | | | | JP | 2020-529803 | A | 08 October 2020 |
| | | | | JP | 2022-119812 | A | 17 August 2022 |
| | | | | JP | 7127112 | B2 | 29 August 2022 |
| | | | | JP | 7459169 | B2 | 01 April 2024 |
| | | | | US | 11368266 | B2 | 21 June 2022 |
| | | | | US | 11743010 | B2 | 29 August 2023 |
| | | | | US | 2020-0220679 | A1 | 09 July 2020 |
| | | | | US | 2022-0353034 | A1 | 03 November 2022 |
| | | | | WO | 2019-028903 | A1 | 14 February 2019 |
| KR | 10-2019-0024994 | A | 08 March 2019 | CN | 109479314 | A | 15 March 2019 |
| | | | | CN | 109479314 | B | 04 October 2022 |
| | | | | CN | 115379587 | A | 22 November 2022 |
| | | | | EP | 3476169 | A1 | 01 May 2019 |
| | | | | US | 11206578 | B2 | 21 December 2021 |

Form PCT/ISA/210 (patent family annex) (July 2022)

**INTERNATIONAL SEARCH REPORT**
Information on patent family members

International application No.

**PCT/KR2024/010907**

| Patent document cited in search report | Publication date (day/month/year) | Patent family member(s) | | Publication date (day/month/year) |
|---|---|---|---|---|
| | | US 2018-0035332 A1 | | 01 February 2018 |
| | | WO 2018-021834 A1 | | 01 February 2018 |

Form PCT/ISA/210 (patent family annex) (July 2022)